# EUROPEAN PATENT APPLICATION

(11) **EP 4 848 222 A1**
(43) Date of publication of application: **02.12.2026**
(21) Application number: 25305783.0
(22) Date of filing: 30.05.2025
(51) Int. Cl.: G06V 10/764, G06V 10/772, G06V 10/774, G06V 20/40, G06V 40/20

(54) **COMPUTER-IMPLEMENTED METHOD FOR TRAINING A MACHINE LEARNING MODEL**

(71) Applicant: TOYOTA JIDOSHA KABUSHIKI KAISHA, Toyota-shi, Aichi-ken 471-8571 (JP); Institut National de Recherche en Informatique et en Automatique, 78153 Le Chesnay Cedex (FR)
(72) Inventor: FRANCESCA, Gianpiero, 1140 BRUSSELS (BE); GARATTONI, Lorenzo, 1140 BRUSSELS (BE); YANG, Di, 06902 VALBONNE (FR); ALI, Mahmoud, 06902 VALBONNE (FR); BREMOND, François, 06902 VALBONNE (FR); KONG, Quan, CHUO-KU - TOKYO, 103-0022 (JP)
(74) Representative: Cabinet Beau de Loménie

(57) **Abstract**

A computer-implemented method (20) for training a machine learning model configured to generate a feature representation when provided with input data, the computer-implemented method (20) comprising:
- obtaining (21) a training dataset comprising a plurality of training samples, each training sample corresponding to an event;
- extracting (22), for each training sample, a first feature representation from a first type of data, a second feature representation from a second type of data, and a third feature representation from a third type of data; and
- performing (23) contrastive learning to align the first feature representation with at least one of the second feature representation and/or the third feature representation.

## Description

### BACKGROUND OF THE INVENTION

### 1. Field of the invention

The present disclosure relates to the field of machine learning, computer vision, and human behavior understanding. More specifically, the invention relates to an apparatus and a computer-implemented method for training a machine learning model configured to generate a feature representation when provided with input data.

### 2. Description of Related Art

Human (can be substituted with "object") action recognition is a fundamental task in artificial intelligence and machine perception, wherein a system aims to detect, characterize, and interpret patterns of human (or object) motion from one type of sensor data. These data types may include, for example, video streams, pose estimation outputs, inertial measurements, or textual annotations describing observed behavior. These systems attempt to infer what action is being performed, and in some cases why or by whom, based on observable movement over time.

As intelligent systems become increasingly ubiquitous and contextsensitive, the ability to automatically recognize human actions, particularly from video streams, depth sensors, or pose estimation data, has gained growing relevance across multiple domains.

In robotics, action recognition allows robots to perceive and respond to human collaborators, adapting their behavior in shared workspaces. In autonomous vehicles, recognizing gestures, driver states, or pedestrian intent is critical for safety and human-aware navigation. In healthcare and assisted living, identifying movements such as falls, tremors, or rehabilitation exercises supports patient monitoring. In workplace safety, continuous monitoring of operator gestures can help detect risky behavior near hazardous machinery. Across these domains, action recognition forms a key enabler of systems that must interact naturally and safely with humans.

At its core, human action recognition involves determining what is moving, how it is moving, and when. This requires analyzing both spatial configurations (e.g., joint positions, body posture) and their temporal dynamics (e.g., motion speed, duration, and sequence). Successful recognition depends on the system's capacity to detect and interpret fine-grained body movements that may vary subtly across contexts and users.

For example, determining whether a driver is distracted may involve detecting whether they are looking away from the road, reaching for an object, or interacting with a passenger, all of which may involve similar arm or head motions. Likewise, distinguishing between safe and hazardous movements near industrial equipment requires interpreting gestures in relation to environmental context, such as proximity to a machine or the timing of the gesture relative to an operational sequence.

In all these cases, accurate action recognition forms the basis for contextaware decision-making. A machine must not only detect that movement is occurring, but also infer its significance. This requires modeling human (or object) behavior in a way that accounts for variability across users, ambiguity in movement, and temporal evolution of actions. As such, the development of methods for training models that produce robust, semantically rich, and generalizable action representations remains a central challenge in the field.

Conventional human action recognition methods typically rely on a limited set of input modalities, such as RGB video, 2D or 3D skeletal motion data, or other structured or unstructured representations of human activity. In video-based approaches, features are extracted from sequences of RGB frames using convolutional neural networks (CNNs) or visual transformers trained to capture appearance, spatial layout, and motion cues. These methods can leverage rich visual information such object presence, body orientation, and scene context. In contrast, skeleton-based methods operate on structural pose representations, typically formatted as 2D or 3D trajectories of anatomical key points tracked over time. Such representations are compact, privacy-preserving, and often semantically aligned with human movement, making them attractive for applications in healthcare, automotive, or ambient computing.

However, both modalities present trade-offs. Visual features are sensitive to illumination changes, occlusions, camera angles, and background clutter, which can degrade performance in real-world scenes. Meanwhile, pose data may suffer from estimation noise, particularly in cases of fast motion, self-occlusion, or non-standard body configurations, and lacks the broader contextual richness carried by images or video.

Beyond individual limitations of each modality, existing systems are constrained by two major architectural and methodological issues. First, most action recognition models are trained in a fully supervised and dataset-specific manner, using labeled action categories defined within the training corpus. This leads to the learning of representations that are overfit to the training distribution and do not generalize well to new domains, tasks, or unseen action classes. For instance, a typical model may exhibit poor performance when applied to a different dataset involving different individuals, environments, or action taxonomies. As a result, transferring such models to new applications often requires extensive retraining, which is costly and limits scalability. Second, modalities are processed separately through dedicated network, and their features are merged via simple operations such as concatenation or averaging. This design fails to capture cross-modal dependencies, such as how specific body movements are informed by object context, or how visual scene dynamics correlate with linguistic interpretations of the action. Without joint representation learning, the system cannot fully exploit the complementary nature of these modalities.

These architectural limitations significantly reduce the generalization capacity of current systems, particularly in complex or unconstrained environments. For example, in multi-user scenarios, overlapping actions (e.g., multiple people moving in a shared space) or ambiguous gestures (e.g., pointing vs. reaching) can be difficult to disambiguate without leveraging scene-level or semantic cues. Similarly, real-world actions are temporally variable and may unfold over durations that are unpredictable or non-uniform. However, many models rely on fixed-size temporal windows (e.g., 2-5 seconds) and employ architectures with limited memory, which hinders their ability to capture long-range dependencies or delayed causal relationships between movement and intent.

Furthermore, most existing models assume that only one action occurs at any given time, assigning a single label per frame or segment. This assumption is unrealistic in many practical scenarios where multiple concurrent or overlapping actions may take place, such as walking while gesturing, or reaching while turning. Even when multi-label prediction is supported, it is often implemented through naive thresholding mechanisms without learning co-occurrence patterns or mutual exclusivity between actions. This limits the expressiveness of the system and its ability to accurately model human behavior in natural, multi-modal environments.

Recent advances in contrastive learning have enabled machine learning models to acquire rich and discriminative representations of input data without requiring

explicit class labels. In a contrastive learning framework, the objective is to pull together in the representation space the embeddings of data instances that are deemed similar (referred to as positive pairs), and to push apart those of dissimilar instances (negative pairs). The notion of similarity can be defined in various ways depending on the training step. For example, positive pairs may be two different augmented views of the same image or signals, while negative pairs come from different samples.

In the supervised contrastive learning setting, class labels are used to form positive and negative pairs explicitly. In the self-supervised case, data augmentations are typically relied upon to simulate intra-class variation. Despite their success, such contrastive techniques have not been applied in the context of skeleton-based action understanding. In fact, prior work has mainly focused on training skeleton models using supervised classification loss functions (cross-entropy over predefined action labels), which limits the learned representation to the fixed taxonomy of the training dataset and does not encourage broader semantic structuring.

Moreover, while contrastive learning has been widely used for visionlanguage alignment (e.g., pairing images with captions), it has not yet been effectively leveraged to align feature representations extracted from motion data with other modalities such as visual sequences (e.g., RGB clips) and semantic descriptors (e.g., natural language descriptions of the corresponding activity)..

Therefore, there is a need for training method capable of producing feature representations that are both informative and generalizable, by leveraging multi-modal training data.

### SUMMARY

The object of the present invention is to at least substantially remedy the above-mentioned drawbacks. In this respect, the aim of the invention is to provide a computer-implemented method ("the training method" hereinafter) for training a machine learning model configured to generate a feature representation when provided with input data, the computer-implemented method comprising:
- obtaining a training dataset comprising a plurality of training samples, each training sample corresponding to an event;
- extracting, for each training sample, a first feature representation from a first type of data, a second feature representation from a second type of data, and a third feature representation from a third type of data; and
- performing contrastive learning to align the first feature representation with at least one of the second feature representation and/or the third feature representation.

Accordingly, the aim of the method is to produce feature representations that are both semantically meaningful and transferable across domains or tasks. The method aims to exploit multi-modal information by aligning heterogeneous representations via contrastive learning.

The method involves collecting or accessing a training dataset comprising multiple samples, where each sample is associated with a specific event. An "event" may represent any temporally bounded action, behavior, or occurrence, for example a gesture, a physical activity, user interaction, or contextual change. Each training sample may include multiple types of data that offer complementary views of the same event.

The extracting step comprises encoding each modality independently into a representation using dedicated encoders. For the first type of data, a first encoder is applied to extract a corresponding first feature representation. This encoder may be, for example, a temporal convolutional network (TCN), a recurrent model, or transformer-based encoder. For the second and third type of data, similar architectures are used depending on the nature of the data. A visual encoder (e.g., CNN) for images or video may be used, and a language encoder may also be used as examples. The representations may also be normalized or projected onto a common embedding space to augment compatibility for contrastive learning.

Finally, the method performs the contrastive learning to train the encoders such that semantically related representations (i.e., from the same event) are pulled together in the feature space, and unrelated ones (i.e. from different events) are pushed apart. Positive pairs are thus constructed by associating the first feature representation (e.g., motion) with the second and/or third representation (e.g., visual or textual) from the same event, while negative pairs are formed using representations from different events across the batch.

For example, if the first representation encodes motion (e.g., skeleton), the second encodes video, and the third encodes a textual description, then the contrastive loss minimizes the distance between the motion and video features, and between the motion and textual features, for the same event, while maximizing the distance between the mismatched pairs. Each type of data provides a distinct semantic perspective on the same underlying event, and aligning them jointly reinforces the structure of the learned representation space.

This supervised contrastive alignment enforces that the first modality's encoder leads to structure its output space semantically, even if it is used alone at inference time. Through repeated exposure to alignment with multiple complementary modalities during training, the first encoder becomes capable of producing embeddings that are informed by both visual and linguistic relationships, for instance, associating a motion with the way it looks and the way it is described. This enables the encoder to generalize more effectively across domains or action classes and to operate without requiring auxiliary modalities at test time, which is particularly advantageous for deployment in constrained environments.

Optionally, the first type of data comprises a skeleton sequence representing body joint positions over time, the second type of data comprises a sequence of video frames, and the third type of data comprises a textual description of the corresponding event.

The skeleton sequence may encode the positions of anatomical joints (such as shoulder, hips, knees for a human) over time, typically in two or three dimensions. Such skeleton data may be obtained from pose estimation systems, depth sensors, motion capture systems, or inferred from video using pose estimation algorithms.

The second type of data may comprise a sequence of video frames, such as a short RGB clip recorded during the event. These frames provide appearance-based information, including scene context, object interactions, clothing, lighting, and perspective. The video sequence may be processed by visual encoder to extract the spatiotemporal features that reflect how the action looks from an external viewpoint.

The third type of data may comprise a textual description of the event, for example a natural language sentence such as "a person is sitting down", "walking toward a shelf", or "reaching to pick up an object". These textual annotations may be manually provided or automatically generated. They provide a semantic view of the action that is often independent of the specific physical realization.

By aligning the first feature representation (e.g., skeleton) with both the second (video) and/or third (text) representations, the training process encourages the model to learn cross-modal semantic consistency, grounding the motion patterns in both visual perception and language. This triple alignment provides complementary supervision that strengthens the structure of the learned feature space and enhances the transferability of the resulting encoder.

Optionally, the contrastive learning comprises maximizing the similarity between the first feature representation and a positive sample corresponding to the same event, while minimizing similarity with one or more negative samples corresponding to different events.

In this context, positive samples are defined as feature representations derived from other modalities (e.g., second or third type of data) that are semantically aligned with the first feature representation, i.e., they present the same underlying event, although captured through a different modality or perspective. For example, a skeleton-based representation of a person sitting down (first type) may be aligned with the corresponding video clip (second type) or a textual sentence such as "a person is sitting on a chair" (third type).

Conversely, negative samples are representations that originate from different events, i.e., events that differ either in nature, temporal occurrence, or context, and therefore expected to produce embeddings that are semantically distant in the feature space.

To implement this alignment, the method may use a contrastive loss function which operates over similarity scores computed between pairs of embeddings. The similarity may be measured using a dot product, cosine similarity, or other metric in the latent space. The loss is minimized when embeddings from positive pairs are close and embeddings from negative pairs are far apart.

Optionally, the positive sample comprises an augmented version of the first type of data.

An augmented version of the first type of data is a modified instance derived from the same original input. For example, when the first type of data is, for example, a skeleton sequence, various data augmentation techniques may be applied such as spatial transformations by applying random rotations or scaling, or temporal augmentations by perturbing the frame rates or inserting nose, or by joint masking by occluding certain body joints or introducing slight positional noise.

These augmentations are designed to preserve the semantic identity of the event, for example "waving" remains waving despite variation in angle or speed), while producing distinct but aligned inputs.

The present disclosure further relates to a computer-implemented method ("the classifying method" hereinafter) for classifying an event among a plurality of predetermined events, the computer-implemented method comprising:
- receiving input data of the first type, and processing it using a machine learning model trained by performing the training method described above, to generate a feature representation of the received input data;
- comparing the generated feature representation to one or more reference representations associated with the predetermined events; and
- assigning one of the predetermined events to the input data based on the results of the comparison.

An instance of input data of the first type, for example a skeleton sequence, or more generally a motion or signal stream), is received and passed through the encoder previously trained via multi-modal contrastive learning, as described in the training method. The output is a feature representation, i.e., a vector embedding that reflects the semantic meaning of the input. Because this encoder was trained to align the first modality with visual and/or textual counterparts, its output is semantically grounded and suitable for direct comparison with reference representations of known actions, even if they were not part of the original training labels.

The classification is then carried out via similarity-based matching. A set of reference representations are hold, each associated with predefined event class. These reference representations may be textual embeddings, motion exemplars or learned and stored.

Optionally, the reference representations are generated from textual descriptions of the predetermined events.

Optionally, the comparing comprises computing similarity scores between the feature representation and each of the reference representations, and wherein the assigning comprises selecting the predetermined event associated with the highest similarity score.

Optionally, the input data of the first type comprises a skeleton sequence representing body joint positions over time.

Optionally, the method further comprises fine-tuning the machine learning model using a limited number of labeled samples corresponding to one or more of the predetermined events, and subsequently using the fine-tuned model to classify the input data.

This step is particularly useful in scenarios where new event classes are introduced after the initial training phase. Accordingly, the encoder for the first type of data is adapted to the target set of events by exposing it to a small set of labeled examples. The fine-tuning may involve updating the encoder weights using supervised loss, refining the reference representations, or both, depending on the chosen strategy by the person skilled in the art.

Following this fine-tuning step, the computer-implemented method can be performed as described previously (classifying method): processing new input data of the first type, generating a feature representation, and assigning one of the predetermined events via similarity-based comparison.

Optionally, the plurality of predetermined events is defined upon receiving the input data for classification by providing corresponding reference representations without retraining the machine learning model.

This means that the model does not need to be updated or modified when the list of possible events changes. Instead, new events can be introduced by simply supplying new reference vectors that describe these events, for example, using a textual description, a motion example or any other compatible data that can be encoded into the same latent space. Accordingly, when a new input arrives, the method processes the input to create a feature vector, it compares this vector to the reference representations of the defined events, and it assigns the label of the most similar event (no training required). This is advantageous as it is possible to perform the method in new contexts or applications without retraining.

Optionally, the method is applied iteratively to a sequence of input data items of the first type, each item corresponding to a respective event, in order to classify a series of events among the plurality of predetermined events.

The method receives multiple inputs, for example a continuous stream of motion data divided into segments, and processes each one individually but sequentially. For each item of the sequence, the method generates a feature representation using the encoder trained as described above. The feature representation is then compared to the reference representations, and the most similar event is selected and assigned as the classification output.

This is advantageous because the method can track multiple actions over time, produce a timeline of predicted events, and handle cases where several distinct actions occur one after the other.

The present disclosure further relates to a computer program set including instructions for executing the steps of the training method when said program set is executed by at least one computer.

This program set can use any programming language and take the form of source code, or a code intermediate between source code and object code, such a partially compiled form or any other desirable form.

The present disclosure further relates to a computer program set including instructions for executing the steps of the classifying method when said program set is executed by at least one computer.

This program set can use any programming language and take the form of source code, or a code intermediate between source code and object code, such a partially compiled form or any other desirable form.

The present disclosure further relates to an apparatus for training a machine learning model configured to generate a feature representation, when provided with input data, the apparatus comprising:
- an obtaining module configured to obtain a training dataset comprising a plurality of training samples, each training sample corresponding to an event;
- an extracting module configured to extract, for each training sample, a first feature representation from a first type of data, a second feature representation from a second type of data, and a third feature representation from a third type of data; and
- a performing module configured to perform contrastive learning to align the first feature representation with at least one of the second feature representation and/or the third feature representation.

The apparatus referred to hereinafter as the training apparatus, may be configured to carry out the above-mentioned method (referred to hereinafter as the classifying apparatus) and may have part or all of the above-described features. The classifying apparatus may have the hardware structure of a computer.

The disclosure further relates to an apparatus for classifying an event among a plurality of predetermined events, the apparatus comprising:
- a receiving module configured to receive input data of the first type;
- a processing module configured to process the input data using a machine learning model trained by performing the training method as described above, to generate a feature representation of the received input data;
- a comparison module configured to compare the generated feature representation to one or more reference representations associated with the predetermined events; and
- an assigning module configured to assign one of the predetermined events to the input data based on the results of the comparison.

The apparatus referred to hereinafter as the classifying apparatus, may be configured to carry out the above-mentioned method (referred to hereinafter as the classifying method) and may have part or all of the above-described features. The classifying apparatus may have the hardware structure of a computer.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a block diagram of a training apparatus according to an embodiment of the present disclosure;
- FIG.2 is a flowchart of a training method according to an embodiment of the present disclosure;
- FIG. 3 is a block diagram of a classifying apparatus according to an embodiment of the present disclosure; and
- FIG.4 is a flowchart of a classifying method according to an embodiment of the present disclosure.

### DETAILED DESCRIPTION OF EMBODIMENTS

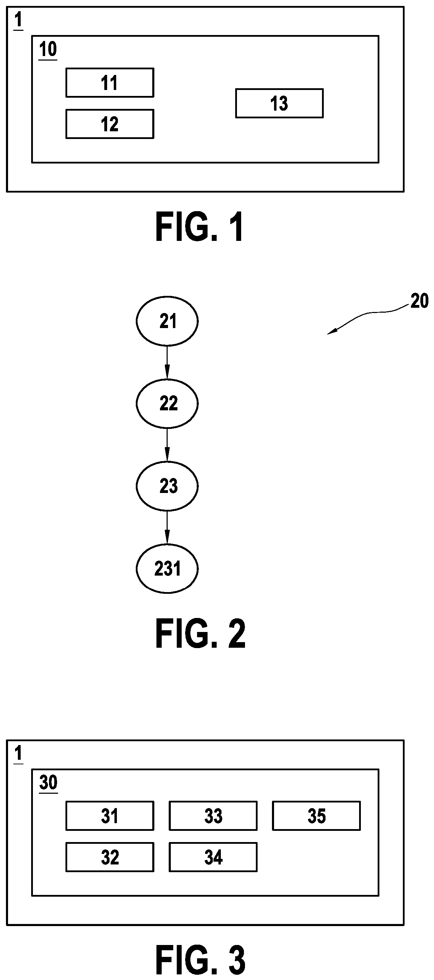

Figure 1 shows a block diagram of a training apparatus 10 comprising an obtaining module 11, an extracting module 12 and a performing module 13. The tasks carried out by the training apparatus 10 are also detailed hereinafter with respect to the corresponding training method 20, an embodiment of which is illustrated in Fig. 2.

The training apparatus 10 may be located inside a vehicle 1 which may be, without limitation, an autonomous or semi-autonomous vehicle. Such vehicle 1 may be directed to an apparatus capable of transporting people or objects from one location to another, such as a car or a motorcycle, and may be categorized into different levels based on the extent of automation and human involvement in the driving tasks.

Alternatively, the training apparatus 10 may be partially located outside the vehicle 1. As a first example, functions of the obtaining module 11 or the extracting module 12 are executed via cloud computing. As a second example, only functions of the obtaining module 11 are executed via cloud computing. Accordingly, the functions of the extracting module 12 are executed inside the vehicle 1.

The training apparatus 10 may be configured to train a machine learning model configured to generate a feature representation when provided with input data. The training apparatus 10 allows the model to learn generalizable representations based on cross-modal supervision. Accordingly, the aim of the training apparatus 10 is to produce feature representations that are both semantically meaningful and transferable across domains or tasks. The training apparatus 10 aims to exploit multi-modal information by aligning heterogeneous representations via contrastive learning.

The training apparatus 10 may comprise an electronic circuit, a processor (shared, dedicated, or group), a combinational logic circuit, a memory that executes one or more software programs, and/or other suitable components that provide the described functionality. In other words, the training apparatus 10 may be a computer device. The training apparatus 10 may be connected to a memory, which may store data, e.g., at least one computer program, which, when executed, carries out the identifying method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be an integrated circuit in which the program is incorporated, the circuit being adapted to execute the identifying method or to be used in its execution.

The obtaining module 11 may be configured to obtain a training dataset comprising a plurality of training samples, each training sample corresponding to the event. Accordingly, the obtaining module 11 may be configured to perform a first step 21 of the training method 20 which is to obtain the training dataset comprising the plurality of training samples, each sample corresponding to the event.

The obtaining module 11 is thus configured to collect or access a training dataset comprising multiple samples, where each sample is associated with a specific event. An "event" may represent any temporally bounded action, behavior, or occurrence, for example a gesture, a physical activity, user interaction, or contextual change. Each training sample may include multiple types of data that offer complementary views of the same event.

The extracting module 12 may be configured to extract, for each training sample, a first representation from a first type of data, a second feature representation from a second type of data, and a third feature representation from a third type of data. Accordingly, the extracting module 12 may be configured to perform a second step 22 of the training method 20 which is to extract, for each training sample, the first representation from the first type of data, the second feature representation from the second type of data, and the third feature representation from the third type of data.

The extracting module 12 thus may be configured to encode each modality independently into a representation using dedicated encoders. For the first type of data, a first encoder is used by the extracting module 12 to extract a corresponding first feature representation. This encoder may be, for example, a temporal convolutional network (TCN), a recurrent model, or transformer-based encoder. For the second and third type of data, similar architectures are used depending on the nature of the data. A visual encoder (e.g., CNN) for images or video may be used by the extracting module 12, and a language encoder may be used also as examples. The representations may also be normalized or projected onto a common embedding space to augment compatibility for contrastive learning.

The first type of data may comprise for example a skeleton sequence representing body joints positions over time.

The skeleton sequence may encode the positions of anatomical joints (such as shoulder, hips, and knees for a human) over time, typically in two or three dimensions. Such skeleton data may be obtained from pose estimation systems, depth sensors, motion capture systems, or inferred from video using pose estimation algorithms.

The second type of data may comprise for example a sequence of video frames.

Accordingly, the second type of data may comprise a sequence of video frames, such as a short RGB clip recorded during the event. These frames provide appearance-based information, including scene context, object interactions, clothing, lighting, and perspective. The video sequence may be processed by visual encoder to extract the spatio-temporal features that reflect how the action looks from an external viewpoint.

The third type of data may comprise for example a textual description of the corresponding event.

Accordingly, the third type of data may comprise a textual description of the event, for example a natural language sentence such as "a person is sitting down", "walking toward a shelf", or "reaching to pick up an object". These textual annotations may be manually provided or automatically generated. They provide a semantic view of the action that is often independent of the specific physical realization.

The performing module 13 may be configured to perform contrastive learning to align the first representation with at least one of the second feature representation and/or the third feature representation. Accordingly, the performing module 13 may be configured to perform a third step 23 of the training method 20 which is to perform said contrastive learning to align the first representation with at least one of the second feature representation and/or the third feature representation.

The performing module 13 is thus configured to perform the contrastive learning to train the encoders such that semantically related representations (i.e., from the same event) are pulled together in the feature space, and unrelated ones (i.e. from different events) are pushed apart. Positive pairs are thus constructed by associating the first feature representation (e.g., motion) with the second and/or third representation (e.g., visual or textual) from the same event, while negative pairs are formed using representations from different events across the batch.

For example, if the first feature representation encodes motion (e.g., skeleton), the second feature representation encodes video, and the third feature representation encodes a textual description, then the contrastive loss minimizes the distance between the motion and video features, and between the motion and textual features, for the same event, while maximizing the distance between the mismatched pairs. Each type of data provides a distinct semantic perspective on the same underlying event, and aligning them jointly reinforces the structure of the learned representation space.

This supervised contrastive alignment enforces that the first modality's encoder leads to structure its output space semantically, even if it is used alone at inference time. Through repeated exposure to alignment with multiple complementary modalities during training, the first encoder becomes capable of producing embeddings that are informed by both visual and linguistic relationships, for instance, associating a motion with the way it looks and the way it is described. This enables the encoder to generalize more effectively across domains or action classes and to operate without requiring auxiliary modalities at test time, which is particularly advantageous for deployment in constrained environments.

The contrasting learning may comprise maximizing the similarity between the first feature representation and a positive sample corresponding to the same event, while minimizing similarity with one or more negative samples corresponding to different events. Accordingly, the third step 23 of the training method comprises optionally a first substep 231 comprising maximizing the similarity between the first feature representation and said positive sample corresponding to the same event, and comprising minimizing the similarity with said one or more negative samples corresponding to different events.

In this context, positive samples are defined as feature representations derived from other modalities (e.g., second or third type of data) that are semantically aligned with the first feature representation, i.e., they present the same underlying event, although captured through a different modality or perspective. For example, a skeleton-based representation of a person sitting down (first type) may be aligned with the corresponding video clip (second type) or a textual sentence such as "a person is sitting on a chair" (third type).

Conversely, negative samples are representations that originate from different events, i.e., events that differ either in nature, temporal occurrence, or context, and therefore expected to produce embeddings that are semantically distant in the feature space.

To implement this alignment, the performing module 13 may use a contrastive loss function which operates over similarity scores computed between pairs of embeddings. The similarity may be measured using a dot product, cosine similarity, or other metric in the latent space. The loss is minimized when embeddings from positive pairs are close and embeddings from negative pairs are far apart.

As an example, the loss function may be defined as follow: ${L}_{self} = {L}_{mm} + {L}_{mv}$ (1) 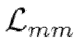 is defined as follow: ${L}_{mm} = - E \left(log\frac{{e}^{Sim \left({E}_{M}\left(sk\right){, E}_{M}\left({sk}^{+}\right)\right)}}{{\sum }_{n = 1}^{N} {e}^{Sim \left({E}_{M}\left(sk\right){, E}_{M}\left({sk}_{n}^{-}\right)\right)}}\right)$ (2) 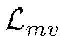 is defined as follow: ${L}_{mv} = - E \left(log\frac{{e}^{Sim \left({E}_{M}\left(sk\right){, E}_{V}\left(v\right)\right)}}{{\sum }_{n = 1}^{N} {e}^{Sim \left({E}_{M}\left(sk\right){, E}_{V}\left({v}_{n}^{-}\right)\right)}}\right) .$ (3) wherein:
E_{M}(sk) and E_{M}(sk⁺) denote a positive pair of skeleton representations (first type of data), Eᵥ(v) being the corresponding visual features of E_{M}(sk);
N is the number of samples used during training;
${E}_{M} \left({sk}_{1}^{-}\right) , … , {E}_{M} \left({sk}_{N}^{-}\right)$ denote the encoded feature representations of N skeleton sequences ; and
${E}_{V} \left({v}_{1}^{-}\right) , … , {E}_{V} \left({v}_{N}^{-}\right)$ denote the encoded feature representations N video clips (second type of data); and

The similarity sim is computed as in Equation (4) where Temp refers to the temperature hyper-parameter *(*Wu, Z., Xiong, Y., Yu, S.X., Lin, D.: Unsupervised feature learning via non-parametric instance discrimination. In: CVPR (2018*),* and ϕ is a learnable mapping function (i.e., a MLP (for Multilayer Perceptron") projection head *(*Feichtenhofer, C., Fan, H., Xiong, B., Girshick, R., He, K.: A large-scale study on unsupervised spatiotemporal representation learning. In: CVPR*).* $Sim \left(x, y\right) = \frac{ϕ \left(x\right) ⋅ ϕ \left(y\right)}{\left‖ϕ\left(x\right)\right‖ ⋅ \left‖ϕ\left(y\right)\right‖} ⋅ \frac{1}{Temp} ,$ (4)

A supervised contrastive loss function may be employed during training and is used in addition to the self-supervised loss described above : ${L}_{sup} = {L}_{mm} + {L}_{mv} + {L}_{mt}$ (5) where the 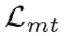 is defined in Equation (6) : ${L}_{mt} = - E \left(log\frac{{e}^{Sim \left({E}_{M}\left(sk\right){, E}_{T}\left(a\right)\right)}}{{\sum }_{n = 1}^{N} {e}^{Sim \left({E}_{M}\left(sk\right){, E}_{T}\left({a}_{n}^{-}\right)\right)}}\right) .$ (6) wherein
${E}_{M} \left({a}_{1}^{-}\right) , … , {E}_{M} \left({a}_{N}^{-}\right)$ are negative textual samples corresponding to different action classes, and
E_{T}(a) is the textual feature representation of a corresponding action annotation (third type).

The positive sample may comprise an augmented version of the first type of data for example.

An augmented version of the first type of data is a modified instance derived from the same original input. For example, when the first type of data is, for example, a skeleton sequence, various data augmentation techniques may be applied such as spatial transformations by applying random rotations or scaling, or temporal augmentations by perturbing the frame rates or inserting nose, or by joint masking by occluding certain body joints or introducing slight positional noise.

These augmentations are designed to preserve the semantic identity of the event, for example "waving" remains waving despite variation in angle or speed), while producing distinct but aligned inputs.

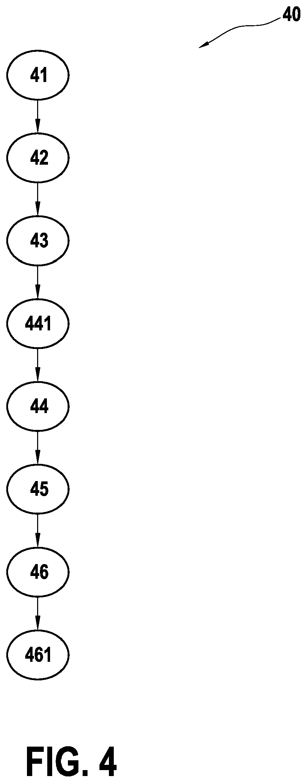

Figure 3 shows a block diagram of a classifying apparatus 30 comprising a receiving module 31, a processing module 32, a comparison module 33, and an assigning module 34. The tasks carried out by the classifying apparatus 30 are also detailed hereinafter with respect to the corresponding classifying method 40, an embodiment of which is illustrated in Fig. 4.

The classifying apparatus 30 may be located inside a vehicle 1 which may be, without limitation, an autonomous or semi-autonomous vehicle. Such vehicle 1 may be directed to an apparatus capable of transporting people or objects from one location to another, such as a car or a motorcycle, and may be categorized into different levels based on the extent of automation and human involvement in the driving tasks.

Alternatively, the classifying apparatus 30 may be partially located outside the vehicle 1. As a first example, functions of the processing module 32 or the comparison module 33 are executed via cloud computing. As a second example, only functions of the processing module 32 are executed via cloud computing. Accordingly, the functions of the comparison module 33 are executed inside the vehicle 1.

The classifying apparatus 30 may be configured to classify an event among a plurality of predetermined events.

It should be noted that the classifying apparatus 30 may be configured to classify a series of events among the plurality of predetermined events. Accordingly, the classifying apparatus 30 processes iteratively a sequence of input data items of the first type, each item of the sequence corresponding to a respective event.

The classifying module 30 is thus configured to receive multiple inputs, for example a continuous stream of motion data divided into segments, and to process each one individually but sequentially.

This is advantageous because the classifying module 30 can track multiple actions over time, produce a timeline of predicted events, and handle cases where several distinct actions occur one after the other.

The classifying apparatus 30 may comprise an electronic circuit, a processor (shared, dedicated, or group), a combinational logic circuit, a memory that executes one or more software programs, and/or other suitable components that provide the described functionality. In other words, the classifying apparatus 30 may be a computer device. The classifying apparatus 30 may be connected to a memory, which may store data, e.g., at least one computer program, which, when executed, carries out the identifying method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be an integrated circuit in which the program is incorporated, the circuit being adapted to execute the identifying method or to be used in its execution.

Accordingly, the plurality of predetermined events may be defined upon receiving the input data for classification by providing corresponding references representations without retraining the machine learned model.

This means that the model does not need to be updated or modified when the list of possible events changes. Instead, new events can be introduced by simply supplying new reference vectors that describe these events, for example, using a textual description, a motion example or any other compatible data that can be encoded into the same latent space. Accordingly, when a new input arrives, the classifying apparatus 30 may be configured to process the input to create a feature vector, to compare this vector to the reference representations of the defined events, and to assign the label of the most similar event (no training required). This is advantageous as it is possible to perform the classifying method 40 in new contexts or applications without retraining.

The receiving module 31 may be configured to receive input data of the first type. Accordingly, the receiving module 31 may be configured to perform a first step 41 of the classifying method 40 which is to receive the input data of the first type.

For example, the input data of the first type may comprise a skeleton sequence representing body joint positions over time.

The processing module 32 may be configured to process the input data using a machine learning model trained by performing the training method 20, to generate a feature representation of the received input data. Accordingly, the processing module 32 may be configured to perform a second step 42 of the classifying method 40 which is to process the input data using the machine learning model trained by performing the training method 20, to generate a feature representation of the received input data.

The output is thus a feature representation, i.e., a vector embedding that reflects the semantic meaning of the input. Because this encoder was trained to align the first modality with visual and/or textual counterparts, its output is semantically grounded and suitable for direct comparison with reference representations of known actions, even if they were not part of the original training labels.

The comparison module 33 may be configured to compare the generated feature representation to one or more reference representations associated with the predetermined events. Accordingly, the comparison module 33 may be configured to perform a third step 43 of the classifying method 40 which is to compare the generated feature representation to said one or more reference representations associated with the predetermined events.

The reference representations may be generated from textual descriptions of the predetermined events. To this end, the comparison module 33 may be configured to compute similarity scores between the feature representation and each of the reference representations. Accordingly, the comparison module 33 may be configured to perform a first substep 441 of the third step 43 of the classifying method 40 which is to compute the similarity scores between the feature representation and each of the reference representations.

The assigning module 34 may be configured to assign one of the predetermined events to the input data based on the results of the comparison. To this end, the assigning module 34 may be configured to select the predetermined event associated with the highest similarity score. Accordingly, the assigning module 34 may be configured to perform a fourth step 44 of the classifying method 40 which is to assign one of the predetermined events to the input data based on the results of the comparison. To this end, the forth step 44 may comprise a first substep comprising selecting the predetermined event associated with the highest similarity score.

The classifying apparatus 30 may also comprise a fine-tuning module 35 that may be configured to fine-tune the machine learning model using a limited number of labeled samples corresponding to one or more of the predetermined events, and may also be configured to subsequently use the fine-tuned model to classify the input data. Accordingly, the fine-tuning module 35 may be configured to perform a fifth step 45 of the classifying method 40 which is to fine-tune the machine learning model using said limited number of labeled samples corresponding to said one or more of the predetermined events. Similarly, the fine-tuning module 35 may be configured to perform a sixth step 46 of the classifying method 40 which is to subsequently use the fine-tuned model to classify the input data.

The fine-tuning module 35 is particularly useful in scenarios where new event classes are introduced after the initial training phase. Accordingly, the encoder for the first type of data is adapted to the target set of events by exposing it to a small set of labeled examples.

The fine-tuning module 35 may be configured to update the encoder weights using supervised loss, refining the reference representations, or both, depending on the chosen strategy by the person skilled in the art. Accordingly, the fine-tuning module 35 may be configured to perform a first substep 461 of the sixth step 46 of the classifying method 40 which is to update the encoder weights using supervised loss, refining the reference representations, or both, depending on the chosen strategy by the person skilled in the art.

Following fine-tuning the machine learning model, the classifying apparatus 30 can be activated again to process new input data of the first type, in order to generate a feature representation, and to assign one of the predetermined events via similarity-based comparison.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method (20) for training a machine learning model configured to generate a feature representation when provided with input data, the computer-implemented method (20) comprising:
- obtaining (21) a training dataset comprising a plurality of training samples, each training sample corresponding to an event;
- extracting (22), for each training sample, a first feature representation from a first type of data, a second feature representation from a second type of data, and a third feature representation from a third type of data; and
- performing (23) contrastive learning to align the first feature representation with at least one of the second feature representation and/or the third feature representation.

2. The computer-implemented method (20) according to claim 1, wherein the first type of data comprises a skeleton sequence representing body joint positions over time, the second type of data comprises a sequence of video frames, and the third type of data comprises a textual description of the corresponding event.

3. The computer-implemented method (20) according to claim 1 or 2, wherein the contrastive learning (23) comprises maximizing (231) the similarity between the first feature representation and a positive sample corresponding to the same event, while minimizing similarity with one or more negative samples corresponding to different events.

4. The computer-implemented method (20) according to claim 3, wherein the positive sample comprises an augmented version of the first type of data.

5. A computer-implemented method (40) for classifying an event among a plurality of predetermined events, the computer-implemented method (40) comprising:
- receiving (41) input data of the first type, and processing it using a machine learning model trained by performing a computer-implemented method in accordance with any one of claims 1 to 4, to generate a feature representation of the received input data;
- comparing (42) the generated feature representation to one or more reference representations associated with the predetermined events; and
- assigning (44) one of the predetermined events to the input data based on the results of the comparison.

6. The computer-implemented method (40) according to claim 5, wherein the reference representations are generated from textual descriptions of the predetermined events.

7. The computer-implemented method (40) according to claim 5 or 6, wherein the comparing (43) comprises computing (441) similarity scores between the feature representation and each of the reference representations, and wherein the assigning (44) comprises selecting the predetermined event associated with the highest similarity score.

8. The computer-implemented method (40) according to any one of claims 5 to 7, wherein the input data of the first type comprises a skeleton sequence representing body joint positions over time.

9. The computer-implemented method (40) according to any one of claims 5 to 8, further comprising fine-tuning (45) the machine learning model using a limited number of labeled samples corresponding to one or more of the predetermined events, and subsequently using (46) the fine-tuned model to classify the input data.

10. The computer-implemented method (40) according to any one of claims 5 to 9, wherein the plurality of predetermined events is defined upon receiving the input data for classification by providing corresponding reference representations without retraining the machine learning model.

11. The computer-implemented method (40) according to any one of claims 5 to 10, wherein the method (40) is applied iteratively to a sequence of input data items of the first type, each item corresponding to a respective event, in order to classify a series of events among the plurality of predetermined events.

12. A computer program set including instructions for executing the steps of the method (20) of any one of claims 1 to 4 when said program set is executed by at least one computer.

13. A computer program set including instructions for executing the steps of the method (40) of any one of claims 5 to 11 when said program set is executed by at least one computer.

14. An apparatus (10) for training a machine learning model configured to generate a feature representation, when provided with input data, the apparatus (10) comprising:
- an obtaining module (11) configured to obtain a training dataset comprising a plurality of training samples, each training sample corresponding to an event;
- an extracting module (12) configured to extract, for each training sample, a first feature representation from a first type of data, a second feature representation from a second type of data, and a third feature representation from a third type of data; and
- a performing module (13) configured to perform contrastive learning to align the first feature representation with at least one of the second feature representation and/or the third feature representation.

15. An apparatus (30) for classifying an event among a plurality of predetermined events, the apparatus (30) comprising:
- a receiving module (31) configured to receive input data of the first type;
- a processing module (32) configured to process the input data using a machine learning model trained by performing a computer-implemented method in accordance with any one of claims 1 to 4, to generate a feature representation of the received input data;
- a comparison module (33) configured to compare the generated feature representation to one or more reference representations associated with the predetermined events; and
- an assigning module (34) configured to assign one of the predetermined events to the input data based on the results of the comparison.

## Amended claims

### Amended claims in accordance with Rule 137(2) EPC.

1. A computer-implemented method (40) for classifying an event among a plurality of predetermined events, the computer-implemented method (40) comprising:
- receiving (41) input data of the first type, and processing it using a machine learning model trained by performing a computer-implemented method (20) configured to generate a feature representation when provided with said input data and comprising:
- obtaining (21) a training dataset comprising a plurality of training samples, each training sample corresponding to an event;
- extracting (22), for each training sample, a first feature representation from a first type of data, a second feature representation from a second type of data, and a third feature representation from a third type of data; and
- performing (23) contrastive learning to align the first feature representation with at least one of the second feature representation and/or the third feature representation,
the computer-implemented method (40) for classifying said event further comprising:
- comparing (42) the generated feature representation to one or more reference representations associated with the predetermined events; and
- assigning (44) one of the predetermined events to the input data based on the results of the comparison,
wherein the reference representations are generated from textual descriptions of the predetermined events.

2. The computer-implemented method (40) according to claim 1, wherein the comparing (43) comprises computing (441) similarity scores between the feature representation and each of the reference representations, and wherein the assigning (44) comprises selecting the predetermined event associated with the highest similarity score.

3. The computer-implemented method (40) according to claim 1 or 2, wherein the input data of the first type comprises a skeleton sequence representing body joint positions over time.

4. The computer-implemented method (40) according to any one of claims 1 to 3, further comprising fine-tuning (45) the machine learning model using a limited number of labeled samples corresponding to one or more of the predetermined events, and subsequently using (46) the fine-tuned model to classify the input data.

5. The computer-implemented method (40) according to any one of claims 1 to 4, wherein the plurality of predetermined events is defined upon receiving the input data for classification by providing corresponding reference representations without retraining the machine learning model.

6. The computer-implemented method (40) according to any one of claims 1 to 5, wherein the method (40) is applied iteratively to a sequence of input data items of the first type, each item corresponding to a respective event, in order to classify a series of events among the plurality of predetermined events.

7. A computer program set including instructions for executing the steps of the method (40) of any one of claims 1 to 6 when said program set is executed by at least one computer.

8. An apparatus (30) for classifying an event among a plurality of predetermined events, the apparatus (30) comprising:
- a receiving module (31) configured to receive input data of the first type;
- a processing module (32) configured to process the input data using a machine learning model trained by performing a computer-implemented method (20) configured to generate a feature representation when provided with said input data and comprising:
- obtaining (21) a training dataset comprising a plurality of training samples, each training sample corresponding to an event;
- extracting (22), for each training sample, a first feature representation from a first type of data, a second feature representation from a second type of data, and a third feature representation from a third type of data; and
- performing (23) contrastive learning to align the first feature representation with at least one of the second feature representation and/or the third feature representation,
the apparatus (30) further comprising:
- a comparison module (33) configured to compare the generated feature representation to one or more reference representations associated with the predetermined events; and
- an assigning module (34) configured to assign one of the predetermined events to the input data based on the results of the comparison,
wherein the reference representations are generated from textual descriptions of the predetermined events.
